# EUROPEAN PATENT APPLICATION

(11) **EP 4 410 662 A1**
(43) Date of publication of application: **07.08.2024**
(21) Application number: 23155141.7
(22) Date of filing: 06.02.2023
(51) Int. Cl.: B63H 23/30, B60L 1/00, B63J 3/02, B63H 23/02, B63H 21/20

(54) **MARINE PROPULSION SYSTEM**

(71) Applicant: W-FIN S.à R.L., 1610 Luxembourg (LU)
(72) Inventor: CARDINI, Luciano, PERGOLA (IT)
(74) Representative: Puggioli, Tommaso

(57) **Abstract**

A marine propulsion system (1) comprises
- a motion generator (2), for example, an internal combustion engine or a gas turbine, Otto or diesel cycle;
- an electrical machine (3) drivable by the motion generator (2) to work as an electric generator;
- a BUS line (4) in communication with the electrical machine (3);
- a propelling device (5) drivable by the motion generator (2) and/or by the electrical machine (3);
- a first clutch mechanism (6) between the motion generator (2) and the electrical machine (3) to connect the motion generator (2) to the electrical machine (3) to transmit motion from the motion generator (2) to the electrical machine (3) and to disconnect the motion generator (2) from the electrical machine (3)
- a second clutch mechanism (7) between the electrical machine (3) and the propelling device (5) to connect the electrical machine (3) to the propelling device (5) to transmit motion from the electrical machine (3) to the propelling device (5) and to disconnect the electrical machine (3) from the propelling device (5).

## Description

This invention relates to a marine propulsion system and, in particular, a hybrid marine propulsion system.

Prior art propulsion systems adopted in the field of marine engineering can be broadly divided into traditional (Diesel) mechanical drives, electrical drives and hybrid drives that combine in different ways the opportunities offered by the different propulsion technologies, namely: Diesel, electrical, hydrogen and others.

Prior art hybrid propulsion systems include "parallel hybrid" systems in which an internal combustion mechanical drive system, or, in more simple terms, an internal combustion engine, is combined with an electric machine by a component known as a "coupler".

The parallel hybrid propulsion system is used mainly in pleasure craft, from cruisers to mega and giga yachts, since minor technical adjustments when choosing the propulsive configuration for the craft are sufficient to combine the advantages of mechanical drive with those of electrical drive, which can serve both as a booster (to reach top speed) and as a steady-state propulsion system (for cruising at sustained speeds), completely noiselessly if associated with an energy accumulation system.

In effect, the electrical machines in a hybrid propulsion system can act as electrical propelling motors when powered by an on-board power generator unit - for example, the one or the ones that also power the hotel section - or by the on-board batteries.

The same electrical machines of the propelling system can work as an alternator when the boat is cruising and are driven by the combustion engine, constituting an additional power generator unit together with the engine.

Instead, when the boat is stationary, the propelling combustion engine and the electrical machine connected to it cannot be used to charge the batteries and at least one on-board power generator unit is necessary.

In this sector, therefore, there is a need for more rational propulsion systems that allow reducing the overall dimensions and costs of machinery on-board. This invention has for an aim to provide a marine propulsion system that meets the above-mentioned need.

This aim is achieved by the marine propulsion system comprising the technical features set out in claim 1. The dependent claims correspond to possible different embodiments of the invention.

According to an aspect, this invention relates to a marine propulsion system. The marine propulsion system comprises a motion generator, for example, an internal combustion engine or a gas turbine, Otto or diesel cycle.

The marine propulsion system comprises an electrical machine which is drivable by the motion generator.

The marine propulsion system comprises a BUS line in communication with the electrical machine.

The marine propulsion system comprises at least one device which is drivable by the motion generator and/or by the electrical machine.

The marine propulsion system comprises a first clutch mechanism between the motion generator and the electrical machine to connect the motion generator to the electrical machine and to disconnect the motion generator from the electrical machine.

The first clutch mechanism may, for example, comprise a friction clutch. For example, the first clutch mechanism may be a friction clutch, in particular if the motion generator and the electrical machine are coaxial.

The first clutch mechanism may, for example, comprise a pneumatically or electromagnetically operated dog clutch.

For example, the first clutch mechanism may be a pneumatically or electromagnetically operated dog clutch, in particular if the motion generator and the electrical machine are coaxial.

The marine propulsion system comprises a second clutch mechanism between the electrical machine and the propelling device to connect the electrical machine to the propelling device and to disconnect the electrical machine from the propelling device.

The second clutch mechanism may, for example, comprise a friction clutch. For example, the second clutch mechanism may be a friction clutch, in particular if the electrical machine and the propelling device are coaxial. The second clutch mechanism may, for example, comprise a pneumatically or electromagnetically operated dog clutch.

For example, the second clutch mechanism may be a pneumatically or electromagnetically operated dog clutch, in particular if the electrical machine and the propelling device are coaxial.

The propulsion system may comprise a reduction gear between the second clutch mechanism and the propelling device.

The propulsion system may comprise an energy accumulation system in communication with the BUS line. The accumulation system may comprise, for example, capacitors and/or super capacitors and/or batteries.

The propulsion system preferably comprises a DC-to-DC converter between the bus line and the accumulation system.

The propulsion system may comprise an electric propulsor powered by the bus line.

The propulsion system may comprise a bidirectional AC-to-DC converter between the bus line and the electrical machine.

Further features and advantages are more apparent in the exemplary, hence non-limiting description which follows of a preferred embodiment of a marine propulsion system.

The description is set out below with reference to the accompanying drawings which are provided solely for purposes of illustration without restricting the scope of the invention and in which:
- Figure 1 shows a block diagram representing an engineering system of a boat, comprising a propulsion system according to this disclosure, in a first working configuration in a first operating mode;
- Figure 2 shows a block diagram representing the engineering system of Figure 1 with the propulsion system in a second operating mode;
- Figure 3 shows a block diagram representing the engineering system of Figure 1 with the propulsion system in a second working configuration;

- Figure 4 shows a block diagram representing the engineering system of Figure 1 with the propulsion system in a third working configuration. With reference to the accompanying drawings, the numeral 100 denotes an engineering system of a boat, not illustrated.

The engineering system 1 comprises a boat propulsion system or marine propulsion system, denoted in its entirety by the numeral 1.

The marine propulsion system 1 comprises a motion generator 2, for example, an internal combustion or gas turbine engine, based on an Otto, Diesel, Atkinson, Wankel, Stirling, Rankine, Bryton-Joule cycle or any other solution of known type.

The marine propulsion system 1 comprises an electrical machine 3 which is connectable to the motion generator.

The electrical machine 2 is drivable by the motion generator 2 to work as an electric generator (in substantially known manner).

The marine propulsion system 1 comprises a BUS line 4, preferably a direct current bus, in communication with the electrical machine 3.

As illustrated, the propulsion system 1 may comprise a bidirectional AC-to-DC converter C1 between the BUS line 4 and the electrical machine 3. The BUS line 4 can receive electrical energy from the electrical machine 3 when the electrical machine 3 works as an electric generator (in substantially known manner).

The BUS line 4 can feed the electrical machine 3 in such a way that the electrical machine 3 works as an electric motor (in substantially known manner).

The marine propulsion system 1 comprises a propelling device 5, schematically represented as a propeller in the accompanying drawings, which is drivable by the motion generator 2 and/or by the electrical machine 3.

The propelling device 5 comprises, for example, surface propellers and/or an azimuth foot and/or a stern foot and/or a waterjet and/or an IPS and/or other propelling system.

As clarified below, the propelling device 5 may be driven by the motion generator 2 or by the electrical machine 3 or by the motion generator 2 and the electrical machine 3 in conjunction.

The marine propulsion system 1 comprises a clutch mechanism 6 between the motion generator 2 and the electrical machine 3 to connect the motion generator 2 to the electrical machine 3 and to disconnect the motion generator 2 from the electrical machine 3.

The marine propulsion system 1 comprises a clutch mechanism 7 between the electrical machine 3 and the propelling device 5 to connect the electrical machine 3 to the propelling device 5 and to disconnect the electrical machine 3 from the propelling device 5.

The clutch mechanisms 6, 7 are essentially mechanisms that allow motion to be transmitted between two rotary drive mechanisms, that is to say, between the motion generator 2 and the electrical machine 3 and between the electrical machine 3 and the propelling device 5.

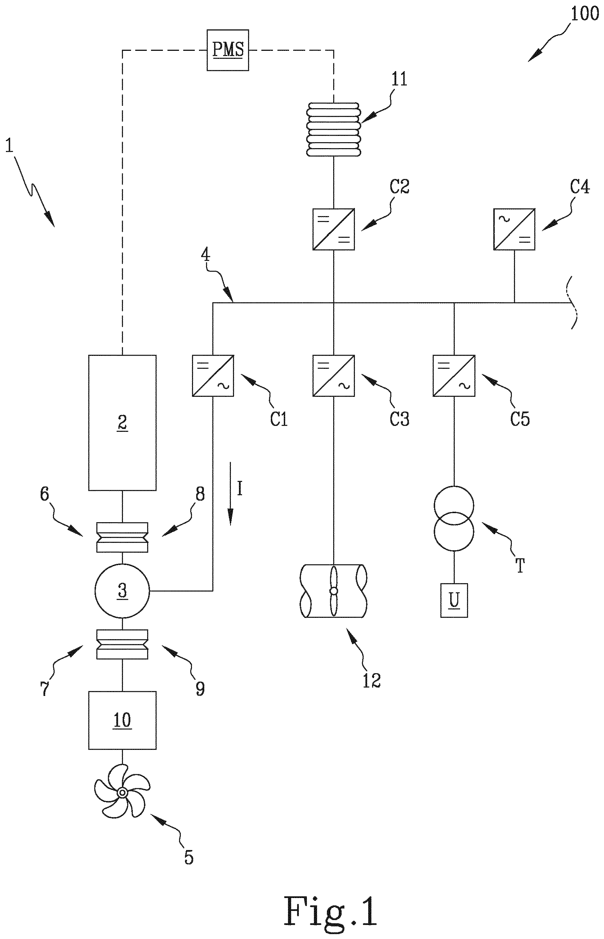

The clutch mechanism 6 adopts a first working configuration, illustrated schematically in Figures 1, 2 and 4, where the motion generator 2 and the electrical machine 3 are coupled to each other and motion is transmitted from the motion generator 2 to the electrical machine 3.

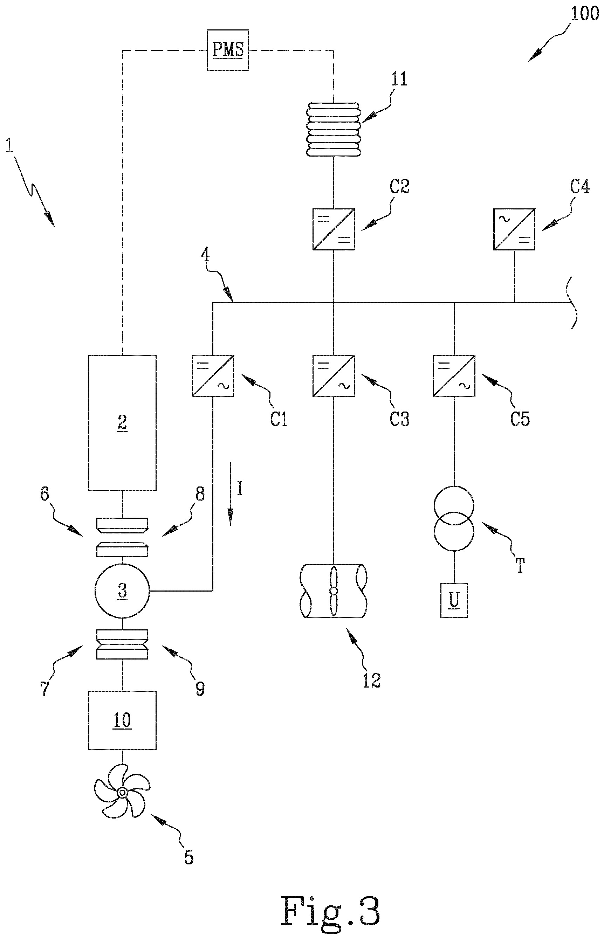

The clutch mechanism 6 adopts a second working configuration, illustrated schematically in Figure 3, where the motion generator 2 and the electrical machine 3 are uncoupled from each other.

The clutch mechanism 7 adopts a first working configuration, illustrated schematically in Figures 1, 2 and 3, where the electrical machine 3 and the propelling device 5 are coupled to each other and motion is transmitted from the electrical machine 3 to the propelling device 5.

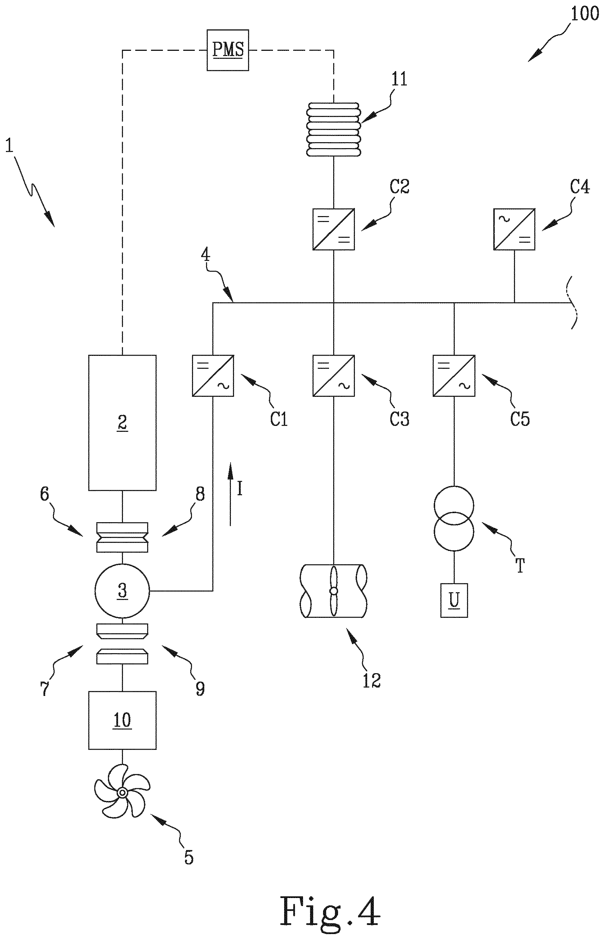

The clutch mechanism 7 adopts a second working configuration, illustrated schematically in Figure 4, where the electrical machine 3 and the propelling device 5 are uncoupled from each other.

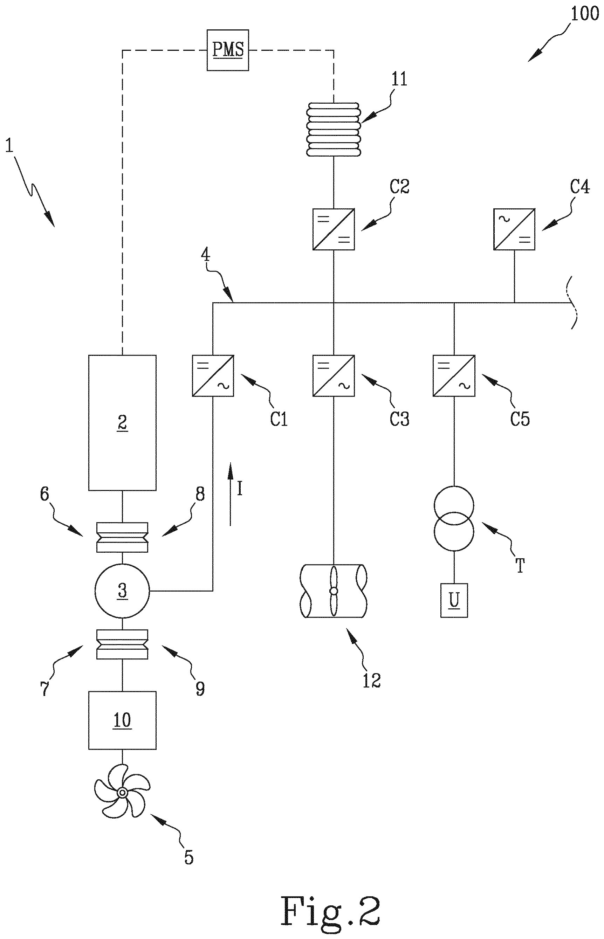

In the configuration of Figures 1 and 2, the motion generator 2 and the propelling device 5 are coupled by the clutch mechanism 6, the electrical machine 3 and the clutch mechanism 7 so that motion can be transferred from the motion generator 2 to the propelling device 5.

In the embodiment illustrated, the clutch mechanism 6 comprises a friction clutch 8 of any substantially known type.

Preferably, the friction clutch 8 constitutes the clutch mechanism 6, that is to say, the motion generator 2 and the electrical machine 3 are connectable by the clutch 8.

In alternative embodiments, the clutch mechanism 6 may, for example, comprise a pneumatically or electromagnetically operated dog clutch of any substantially known type.

In alternative embodiments, the clutch mechanism 6 may, for example, be a pneumatically or electromagnetically operated dog clutch, in particular if the motion generator 2 and the electrical machine 3 are coaxial.

In the embodiment illustrated, the clutch mechanism 7 comprises a friction clutch 9 of any substantially known type.

Preferably, the friction clutch 9 constitutes the clutch mechanism 7, that is to say, the electrical machine 3 and the propelling device 5 are connectable by the clutch 9.

In alternative embodiments, the clutch mechanism 7 may, for example, comprise a pneumatically or electromagnetically operated dog clutch of any substantially known type.

In alternative embodiments, the clutch mechanism 7 may, for example, be a pneumatically or electromagnetically operated dog clutch, in particular if the electrical machine 3 and the propelling device 5 are coaxial.

In the preferred embodiment illustrated, the propulsion system 1 comprises a reduction gear unit 10, of substantially known type, between the second clutch mechanism and the propelling device 5.

In an embodiment, the reduction gear unit 10 comprises the clutch mechanism 7.

In the example illustrated, the propulsion system 1 comprises an energy accumulation system 11 in communication with the BUS line 4.

The accumulation system 11 is configured for accumulating the electrical energy produced by the electrical machine 3 and to feed it and other equipment connected to the BUS line 4.

The accumulation system 11 comprises, for example, capacitors and/or super capacitors and/or batteries.

The batteries may be, for example, lithium ion, lithium polymer, sodium-nickel, nickel-metal hydride (lead), AGM (gel), mechanical, graphene, solid-state or other type of battery.

As illustrated schematically, the propulsion system 1 comprises a DC-to-DC converter C2 between the BUS line 4 and the accumulation system 11 to allow energy exchange between the BUS line 4 and the accumulation system 11.

In the example illustrated, the propulsion unit 1 comprises at least one electrical propulsor 12, for example, a manoeuvring propeller or a tunnel propeller, powered by the BUS line 4.

The propulsion system 1 comprises a DC-to-AC converter C3 for powering the electrical propulsor 12 and located between the BUS line 4 and the propulsor.

The engineering system 100 illustrated by way of example comprises an AC-to-DC converter C4 for connecting the BUS line 4 to an external power supply, for example, in a port.

The engineering system 100 comprises a DC-to-AC converter C5 for powering via the BUS line 4 the electrical equipment U on board the boat, for example, the hotel.

In the example illustrated, the engineering system 100 comprises an energy transformer system T between the DC-to-AC converter C5 and the electrical equipment U.

Preferably, the boat comprises a system for controlling and managing the engineering system 100, specifically a system for managing the propulsion system 1 and the electrical (and thermal) power installed on board, in communication at least with the propulsion system 1 and schematically represented in the drawings by the block labelled PMS.

Preferably, the system PMS is configured to drive at least the motion generator 2, the electrical machine 3 and the clutch mechanisms 6, 7. Described below are the possible operating modes of the marine propulsion system 1 with reference to Figures 1 to 4.

### Figure 1 - Hybrid cruising.

- Motion generator 2 on;
- Clutch mechanism 6 in the first working configuration (motion generator 2 and electrical machine 3 coupled to each other);
- Electrical machine 3 powered by the BUS line 4 through the converter C1 (current I), working as an electric motor;
- Clutch mechanism 7 in the first working configuration (electrical machine 3 and propelling device 5 coupled to each other).

The motion generator 2, for example, the internal combustion engine, is in operation and the clutch mechanisms 6, 7 are each in the respective first working configuration. The electrical machine 3 is powered by the accumulation system 11 through the BUS line 4 and the converter C1 and works as an electric motor which receives current I.

The power of the motion generator 2 and the power of the electrical machine 3 working as an electric motor, are available to the propelling device 5 for cruising.

### Figure 2 - "Thermal" cruising (propulsion by the motion generator 2 only).

- Motion generator 2 on;
- Clutch mechanism 6 in the first working configuration (motion generator 2 and electrical machine 3 coupled to each other);
- Electrical machine 3 driven by the motion generator 2, operation as an electric generator, the BUS line 4 receives current I through the converter C1;
- Clutch mechanism 7 in the first working configuration (electrical machine 3 and propelling device 5 coupled to each other).

The motion generator 2, for example, an internal combustion engine, is in operation, the clutch mechanisms 6, 7 are each in the respective first working configuration, the electrical machine 3 is driven and works as an electric generator and sends the current I to the BUS line 4. The converter C1 converts the current and sends it to the BUS line 4, thereby powering the on-board equipment and the accumulation system 11. The accumulation system 11, if run down, is recharged.

### Figure 3 - Electrical, zero-emission cruising (propulsion by electrical machine 3 only).

- Motion generator 2 off;
- Clutch mechanism 6 in the second working configuration (motion generator 2 and electrical machine 3 uncoupled from each other);
- Electrical machine 3 powered by the BUS line 4 through the converter C1 (current I), working as an electric motor;
- Clutch mechanism 7 in the first working configuration (electrical machine 3 and propelling device 5 coupled to each other).

The motion generator 2, for example, an internal combustion engine, is off and uncoupled from the electrical machine 3.

The electrical machine 3 is powered by the accumulation system 11 through the BUS line 4 and the converter C1 and works as an electric motor which receives current I.

The power of the electrical machine 3 is available to the propelling device 5 for cruising.

This configuration is suitable, for example, when entering or leaving a port or for cruising in a marine protected area (with accumulation system charged).

### Figure 4 - Boat stationary.

- Motion generator 2 on;
- Clutch mechanism 6 in the first working configuration (motion generator 2 and electrical machine 3 coupled to each other);
- Electrical machine 3 driven by the motion generator 2, operation as an electric generator, the BUS line 4 receives current I through the converter C1;
- Clutch mechanism 7 in the second working configuration (electrical machine 3 and propelling device 5 uncoupled from each other).

The motion generator 2, for example, of the internal combustion engine, is in operation and the clutch mechanism 6 is in the first working configuration. The electrical machine 3 is driven and works as an electric generator and sends the current I to the BUS line 4. The converter C1 converts the current and sends it to the BUS line 4, thereby powering the on-board equipment and the accumulation system 11. The accumulation system 11, if run down, is recharged.

The power of the motion generator 2 is used to power the on-board equipment and the accumulation system 11 through the clutch mechanism 6, the electrical machine 3 working as an electric generator and the converter C1.

The boat remains stationary because the electrical machine 3 and the propelling device 5 are uncoupled from each other.

Advantageously, the presence of the two clutch mechanisms makes the marine propulsion system highly versatile. More specifically, the two clutch mechanisms allow the motion generator, which is normally used for cruising, to be used even just for driving the electrical machine, with the boat stationary, so that it works as a generator and, in practice, constitutes an electric generator unit.

The presence of this electric generator unit optimizes boat design in that it allows providing, for example, one electric generator unit less (in traditional solutions, as mentioned above, the propulsion engine can charge the batteries only when the boat is cruising and therefore at least one electric generator unit is necessary for charging the batteries when the boat is stationary). Dispensing with an electric generator unit allows reducing the overall dimensions and costs of the boat's engineering system.

## Claims

1. A marine propulsion system comprising
- a motion generator (2), for example, an internal combustion engine or a gas turbine, Otto or diesel cycle;
- an electrical machine (3) drivable by the motion generator (2) to work as an electric generator;
- a BUS line (4) in communication with the electrical machine (3);
- a propelling device (5) drivable by the motion generator (2) and/or by the electrical machine (3),
the marine propulsion system being **characterized in that** it comprises
- a first clutch mechanism (6) between the motion generator (2) and the electrical machine (3) to connect the motion generator (2) to the electrical machine (3) to transmit motion from the motion generator (2) to the electrical machine (3) and to disconnect the motion generator (2) from the electrical machine (3)
- a second clutch mechanism (7) between the electrical machine (3) and the propelling device (5) to connect the electrical machine (3) to the propelling device (5) to transmit motion from the electrical machine (3) to the propelling device (5) and to disconnect the electrical machine (3) from the propelling device (5).

2. The marine propulsion system according to claim 1, comprising a reduction gear unit (10) between the second clutch mechanism (7) and the propelling device (5).

3. The marine propulsion system according to claim 1 or 2, comprising an energy accumulation system (11) in communication with the BUS line (4), the energy accumulation system (11) comprising capacitors and/or super capacitors and/or batteries.

4. The marine propulsion system according to claim 3, comprising a DC-to-DC converter (C2) between the BUS line (4) and the energy accumulation system (11).

5. The marine propulsion system according to any one of the preceding claims, comprising at least one electrical propulsor (12) powered by the BUS line (4).

6. The marine propulsion system according to any one of the preceding claims, comprising a bidirectional AC-to-DC converter (C1) between the BUS line (4) and the electrical machine (3).

7. The marine propulsion system according to any one of the preceding claims, wherein the first clutch mechanism (6) comprises a first friction clutch (8).

8. The marine propulsion system according to any one of the preceding claims, wherein the second clutch mechanism (7) comprises a second friction clutch (9).
